# EUROPÄISCHE PATENTSCHRIFT

(11) **EP 1 813 556 B1**
(45) Veröffentlichungstag und Bekanntmachung des Hinweises auf die Patenterteilung: **05.11.2008**
(21) Anmeldenummer: 06001481.8
(22) Anmeldetag: 25.01.2006
(51) Int. Cl.: B65G 1/04

(54) **Lagersystem**
Storage system
Système de stockage

(43) Veröffentlichungstag der Anmeldung: 01.08.2007
(73) Patentinhaber: Bellheimer Metallwerk GmbH, 76756 Bellheim (DE)
(72) Erfinder: Grob, Peter, 8604 Volketswil (CH)
(74) Vertreter: Grünecker, Kinkeldey, Stockmair & Schwanhäusser Anwaltssozietät

(56) Entgegenhaltungen:
- DE-A1- 1 654 538
- DE-U1- 20 305 773

## Beschreibung

Die Erfindung betrifft ein Lagersystem mit Lagerliften, von denen jeder zwei oder mehrere sich jeweils paarweise beidseits eines Schachtes gegenüberliegende Regalsäulen mit übereinander angeordneten Lagerplätzen für Lagergutträger aufweist und von denen jeder über einen im Schacht vertikal und/oder vertikal sowie horizontal verfahrbaren, zum Transport der Lagergutträger an die Lagerplätze und von den Lagerplätzen dienenden Förderer verfügt, wobei die Zufuhr von Lagergutträgern in das sowie die Entnahme von Lagergutträgern aus dem System über Beschickungs- und Entnahmeöffnungen erfolgt, die eine Bedienstation an drei Seiten begrenzen.

Lagersysteme mit Lagerliften, deren Schächte zwischen jeweils einem Paar oder mehreren Paaren sich gegenüberliegender Regalsäulen angeordnet sind, sind aus der DE-U 203 05 773 bekannt. Bei den bekannten Lagersystemen werden die Regalsäulen durch vertikal oder aber vertikal und horizontal verfahrbare Förderer beschickt und entleert, die jeweils unmittelbar in den Bereich der Beschickungs- und Entnahmeöffnungen für die Lagergutträger überführbar sind. Die Zahl der jeweils mit Lagergutträgern beschickbaren Regalsäulen hält sich dabei in engen Grenzen.

Der Erfindung liegt die Aufgabe zugrunde, die Kapazität bekannter Lagersysteme auf vorgegebenen rechtwinkligen Bodenflächen im Sinne einer optimalen Ausnutzung der für die Unterbringung des Lagergutes zur Verfügung stehenden Bodenfläche ohne Beeinträchtigung des Bedienungskomforts zu erhöhen. Gelöst wird diese Aufgabe bei einem gattungsgemäßen Lagersystem erfindungsgemäß dadurch, dass zwischen jeweils zwei, parallel zueinander verlaufende Schächte aufweisenden, die Bedienungsstationen seitlich begrenzenden Lagerliften mit n sich jeweils paarweise gegenüberliegenden Regalsäulen hintereinander n - 1 Lagerlifte mit nur jeweils zwei sich paarweise gegenüberliegenden Regalsäulen angeordnet sind, wobei n gleich oder größer als drei ist und wobei die zwischen den parallel zueinander angeordneten Lagerliften angeordneten Lagerlifte durch Übergabestationen miteinander und mit mindestens einem weiteren, mindestens n sich jeweils paarweise gegenüberliegende Regalsäulen aufweisenden Lagerlift verknüpft sind, dessen Schacht senkrecht zu den Schächten der die Bedienungsstationen seitlich begrenzenden Lagerlifte verläuft.

Das erfindungsgemäße Lagersystem bietet den Vorteil, dass es problemlos sowohl in die Tiefe als auch in die Breite eines Raumes mit im Wesentlichen rechtwinkliger Grundfläche erweitert und der zu seiner Bedienung erforderliche personelle Aufwand klein gehalten werden kann. Durch die Wahl einer Zahl n, die gleich oder größer als 3 ist, lässt sich zudem eine sinnvolle Nutzung der Beschickungs- und Entnahmeöffnungen verwirklichen.

Weitere Merkmale und Einzelheiten der Erfindung ergeben sich aus den Unteransprüchen und der nachstehenden Beschreibung zweier in den beigefügten Zeichnungen dargestellter Ausführungsformen der Erfindung. Es zeigen:
- Fig. 1: ein erstes Lagersystem für einen vergleichsweise schmalen Raum relativ geringer Tiefe und
- Fig. 2: ein zweites Lagersystem für einen breiteren und tieferen Raum.

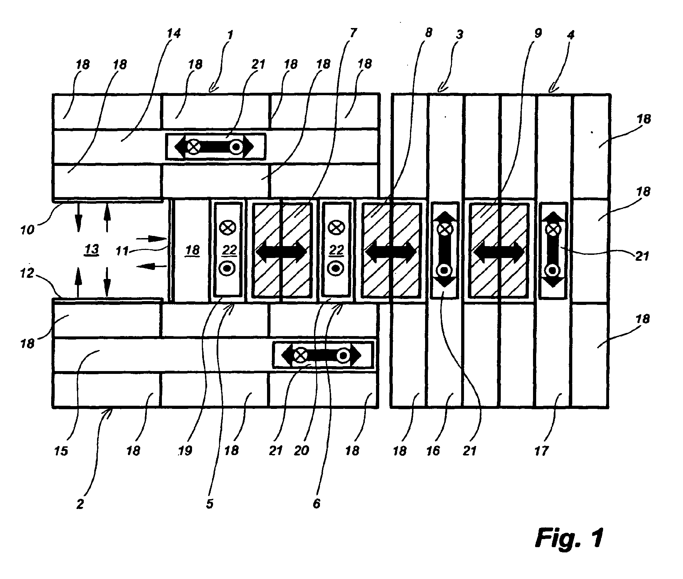

Die Figur 1 zeigt ein Lagersystem mit sechs Lagerliften 1 bis 6, von denen die Lagelifte 5 und 6 durch eine Übergabestation 7, die Lagerlifte 6 und 3 über eine Übergabestation 8 und die Lagerlifte 3 und 4 über eine Übergabestation 9 miteinander verknüpft bzw. verbunden sind. Die Übergabestationen 7, 8, 9 liegen dabei in der gleichen Ebene wie die drei Beschickungs- und Entnahmeöffnungen 10, 11 und 12, die eine Bedienungsstation 13 umgeben. Während die Lagerlifte 1, 2, 3 und 4 jeweils drei Paare sich beidseits eines Schachtes 14, 15, 16 bzw. 17 gegenüberliegender Lagersäulen 18 aufweisen, verfügen die Lagerlifte 5 und 6 in ihren Schächten 19 und 20 nur über jeweils ein Paar sich gegenüberliegender Lagersäulen 18. Sämtliche Lagersäulen 18 haben im Bereich der Übergabestationen 7, 8 und 9 naturgemäß keine Lagerplätze für nicht dargestellte Lagergutträger. Der Aufbau einschlägiger Lagerlifte ist beispielsweise aus der DE 42 33 688 A und der DE 20 2004 012 021 U bekannt. Während die Lagerlifte 1, 2, 3 und 4 mit in den Schächten 14 bis 17 gleichzeitig vertikal und horizontal verfahrbaren Förderern 21 ausgestattet sind, verfügen die Lagerlifte 5 und 6 in ihren Schächten 19 und 20 lediglich über Förderer 22, die nur Vertikalbewegungen ausführen können.

Es versteht sich, dass dem Lagerlift 4 ohne Schwierigkeiten mit Hilfe einer oder mehrerer Übergabestationen weitere Lagerlifte nachgeschaltet werden können, falls ein Raum größerer Tiefe genutzt werden soll.

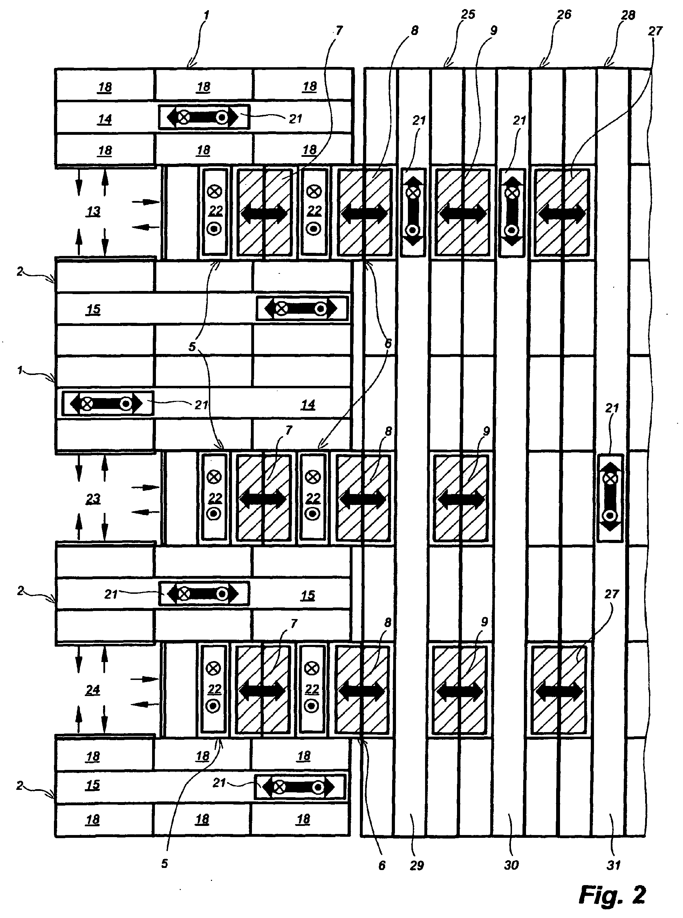

Das Lagersystem lässt sich auch in der Breite erweitern. So ist in Figur 2 ein Lagersystem mit drei in einer Reihe angeordneten Bedienstationen 13, 23 und 24 dargestellt, dessen Aufbau weitgehend dem Aufbau des Lagersystems gemäß Figur 1 entspricht. Letzteres allerdings mit der Maßgabe, dass der Lift 2, der von der Bedienstation 23 bedient wird, zugleich von der Bedienstation 24 bedient werden kann, d. h. dass der Bedienstation 24 kein eigener Lagerlift 1 zugeordnet ist. Für das Lagersystem gemäß Figur 2 wurden daher weitgehend die gleichen Bezugsziffern wie in der Figur 1 verwendet.

Abweichend von den in Figur 1 dargestellten Verhältnissen sind die Übergabestationen 8 und 9 im Falle der Figur 2 mit zwei Lagerliften 25 und 26 und über zusätzliche Übergabestationen 27 mit einem weiteren Lagerlift 28 verbunden, wobei die Lagerlifte 25, 26, 28 jeweils durchgehende Schächte 29, 30 und 31 aufweisen, in denen jeweils durch nur einen Förderer 21 alle zum jeweiligen Lagerlift gehörenden Regalsäulen beschickt und entleert werden können.

## Patentansprüche

1. Lagersystem mit Lagerliften (1 - 6), von denen jeder zwei oder mehrere sich jeweils paarweise beidseits eines Schachtes (14 - 17, 19, 20) gegenüberliegende Regalsäulen (18) mit übereinander angeordneten Lagerplätzen für Lagergutträger aufweist und von denen jeder über einen im Schacht vertikal und/oder vertikal sowie horizontal verfahrbaren, zum Transport der Lagergutträger an die Lagerplätze und von den Lagerplätzen dienenden Förderer (21, 22) verfügt, wobei die Zufuhr von Lagergutträgern in das sowie die Entnahme von Lagergutträgern aus dem System über Beschickungs- und Entnahmeöffnungen (10 -12) erfolgt, die eine Bedienstation (13) an drei Seiten begrenzen, **dadurch gekennzeichnet, dass** zwischen jeweils zwei, parallel zueinander verlaufende Schächte (14, 15) aufweisenden, die Bedienungsstation (13) seitlich begrenzenden Lagerliften (1, 2) mit n sich jeweils paarweise gegenüberliegenden Regalsäulen (18) hintereinander n - 1 Lagerlifte (5, 6) mit nur jeweils zwei sich paarweise gegenüberliegenden Regalsäulen (18) angeordnet sind, wobei n gleich oder größer als drei ist und wobei die zwischen den parallel zueinander angeordneten Lagerliften (1, 2) angeordneten Lagerlifte durch Übergabestationen (7, 8, 9) miteinander und mit mindestens einem weiteren, mindestens n sich jeweils paarweise gegenüberliegende Regalsäulen (18) aufweisenden Lagerlift (3) verknüpft sind, dessen Schacht (16) senkrecht zu den Schächten (14, 15) der n die Bedienungsstation (13) seitlich begrenzenden Lagerlifte (1, 2) verläuft.

2. Lagersystem nach Anspruch 1, **dadurch gekennzeichnet, dass** der weitere, n sich jeweils paarweise gegenüberliegende Regalsäulen (18) aufweisende Lagerlift (3) durch mindestens eine weitere Übergabestation (9) mit mindestens einem zusätzlichen Lagerlift (4) mit mindestens n sich paarweise gegenüberliegenden Regalsäulen (18) verknüpft ist, dessen Schacht (17) parallel zum Schacht (16) des weiteren Lagerliftes (3) verläuft.

3. Lagersystem nach Anspruch 1 oder 2, **dadurch gekennzeichnet, dass** es mehrere durch jeweils mindestens einen n sich paarweise gegenüberliegende Regalsäulen (18) aufweisenden Lagerlift (1, 2) voneinander getrennte, in einer Reihe angeordnete Bedienstationen (13, 23, 24) aufweist.

4. Lagersystem nach Anspruch 3, **dadurch gekennzeichnet, dass** den mehreren Bedienstationen (13, 23, 24) über jeweils nur zwei sich gegenüberliegende Regalsäulen (18) aufweisende Lagerlifte (5, 6) und Übergabestationen (7, 8, 9, 27) Lagerlifte (25, 26, 27) mit Schächten (29, 30, 31) nachgeschaltet sind, die nur jeweils einen Förderer (21) aufweisen.

## Claims

1. Storage system with storage lifts (1 - 6), each of which has two or more shelf columns (18) lying opposite one another respectively in pairs on either side of a shaft (14 - 17, 19, 20) and having storage spaces for freight carriers the storage spaces being arranged on top of each other and each of which has a conveyor (21, 22) which can be displaced vertically and/or vertically as well as horizontally in the shaft in order to convey the freight carriers to the storage spaces, and from the storage spaces, and wherein freight carriers are fed into and are removed from the system via loading and discharge openings (10 - 12) which bound an operating station (13) on three sides,
**characterised in that,**
disposed between two storage lifts (1, 2) laterally bounding the operating station (13), comprising shafts (14, 15) extending parallel with one another, the storage lifts (1, 2) having n shelf columns (18) lying opposite one another respectively in pairs, are located n-1 storage lifts (5, 6) one behind the other each with only two shelf columns (18) lying opposite one another respectively in pairs, whereas n is equal to or higher than three and whereas the storage lifts that are disposed between the storage lifts (1, 2) disposed parallel with one another, are linked by transfer stations (7, 8, 9) to one another and to at least one other storage lift (3) comprising at least n shelf columns (18) lying opposite one another respectively in pairs, the shaft (16) of which extends perpendicular to the shafts (14, 15) of the n storage lifts (1, 2) laterally bounding the operating station (13).

2. Storage system as claimed in claim 1, **characterised in that** the other storage lift (3) comprising n shelf columns (18) lying opposite one another respectively in pairs is linked by at least one other transfer station (9) to at least one additional storage lift (4) with at least n shelf columns (18) lying opposite one another respectively in pairs, the shaft (17) of which extends parallel to the shaft (16) of the other storage lift (3).

3. Storage system as claimed in claim 1 or 2, **characterised in that** it has several operating stations (13, 23, 24) disposed in a row, each separated by at least one storage lift (1, 2) comprising n shelf columns (18) lying opposite one another respectively in pairs.

4. Storage system as claimed in claim 3, **characterised in that** storage lifts (25, 26, 27) with shafts (29, 30, 31) which each have only one conveyor (21) are connected downstream of the several operating stations (13, 23, 24) via storage lifts (5, 6) comprising only two oppositely lying shelf columns (18) each and transfer stations (7, 8, 9, 27).

## Revendications

1. Système de stockage avec ascenseurs d'entrepôt (1 - 6) dont chacun présente deux ou plusieurs colonnes de rayonnage (18) se faisant face respectivement par paire des deux côtés d'une cage (14 - 17, 19, 20), avec des emplacements de stockage superposés pour supports de marchandises et dont chacun dispose d'un transporteur (21, 22) déplaçable verticalement et/ou verticalement et horizontalement dans la cage et servant au transport des supports de marchandises vers les emplacements de stockage et depuis les emplacements de stockage, l'alimentation de supports de marchandises dans le système ainsi que le prélèvement de supports de marchandises du système se faisant par le biais d'ouvertures de chargement et de prélèvement (10 - 12) qui délimitent une station de commande (13) sur trois côtés, **caractérisé en ce que** n - 1 ascenseurs d'entrepôt (5, 6), avec respectivement seulement deux colonnes de rayonnage (18) se faisant face par paire, sont disposés les uns derrière les autres entre respectivement deux ascenseurs d'entrepôt (1, 2) délimitant latéralement la station de commande (13) et présentant des cages (14, 15) s'étendant de manière parallèle l'une par rapport à l'autre, avec n colonnes de rayonnage (18) se faisant respectivement face par paire, dans lequel n est supérieur ou égal à trois et dans lequel les ascenseurs d'entrepôt agencés entre les ascenseurs d'entrepôt (1, 2) parallèles sont liés ensemble par des stations de transfert (7, 8, 9) les uns avec les autres et avec au moins un autre ascenseur d'entrepôt (3) présentant au moins n colonnes de rayonnage (18) se faisant respectivement face par paire, dont la cage (16) s'étend perpendiculairement aux cages (14, 15) des n ascenseurs d'entrepôt (1, 2) délimitant latéralement la station de commande (13).

2. Système de stockage selon la revendication 1, **caractérisé en ce que** l'autre ascenseur d'entrepôt (3) présentant n colonnes de rayonnage (18) se faisant respectivement face par paire est lié par au moins une autre station de transfert (9) à au moins un ascenseur d'entrepôt (4) supplémentaire avec au moins n colonnes de rayonnage (18) se faisant face par paire, dont la cage (17) s'étend parallèlement à la cage (16) de l'autre ascenseur d'entrepôt (3).

3. Système de stockage selon la revendication 1 ou 2, **caractérisé en ce qu'**il présente plusieurs stations de commande (13, 23, 24) disposées en une rangée, séparées les unes des autres par respectivement au moins un ascenseur d'entrepôt (1, 2) présentant n colonnes de rayonnage (18) se faisant face par paire.

4. Système de stockage selon la revendication 3, **caractérisé en ce que** des ascenseurs d'entrepôt (25, 26, 27) avec cages (29, 30, 31) qui ne présentent respectivement qu'un transporteur (21) sont placés en aval des stations de commande (13, 23, 24), par le biais d'ascenseurs d'entrepôt (5, 6) ne présentant respectivement que deux colonnes de rayonnage (18) se faisant face, et de stations de transfert (7, 8, 9, 27).
